# EUROPEAN PATENT APPLICATION

(11) **EP 4 786 938 A1**
(43) Date of publication of application: **05.08.2026**
(21) Application number: 24872003.9
(22) Date of filing: 18.09.2024
(51) Int. Cl.: G01L 3/10, G01B 7/16, G01D 5/241

(54) **CAPACITIVE SENSOR**

(30) Priority: 27.09.2023 JP 2023166325
(71) Applicant: Nitto Denko Corporation, Ibaraki-shi Osaka 567-8680 (JP)
(72) Inventor: HOSOYA Akihiro, Ibaraki-shi, Osaka 567-8680 (JP); FURUTA Kenji, Ibaraki-shi, Osaka 567-8680 (JP)
(74) Representative: Hoffmann Eitle
(86) International application number: PCT/JP2024/033300
(87) International publication number: WO 2025/070211

(57) **Abstract**

It is made possible to simplify a structure in which a plurality of sensor elements are formed into a same sheet shape. An electrostatic capacitance sensor (1) including a first sensor (11) and a second sensor (12), in which the first sensor (11) and the second sensor (12) each have at least a ground layer (51), a dielectric layer (20, 40), and a voltage application layer (22, 42) stacked. The first sensor (11) and the second sensor (12) overlap each other in a partial region in a surface direction, and share the ground layer (51) in common.

## Description

### Technical Field

The present invention relates to an electrostatic capacitance sensor.

### Background Art

For example, in torsion sensors that detect strain in a torsional direction that is applied to objects to be detected such as a bar, electrostatic capacitance types of sensors are known. The electrostatic capacitance sensors each include an electrostatic capacitance section obtained by forming a pair of electrode layers on the surface of a dielectric layer. In the electrostatic capacitance sensor that is used as a torsion sensor, the electrostatic capacitance section detects change in electrostatic capacitance caused by torsion that occurs in the object to be detected (see Patent Literatures 1 and 2, for example).

### Document List

### Patent Literatures

Patent Literature 1: Japanese Patent No. 4242977
Patent Literature 2: Japanese Patent No. 5907220

### Summary of Invention

### Technical Problem

Incidentally, in order to detect torsion in the object to be detected in which a ratio of the height dimension to the diameter dimension is high, such as a long and thin round bar, for example, by an electrostatic capacitance sensor, it is necessary to form the components (sensor elements) of the sensor including an electrostatic capacitance section in an oblique direction to a longitudinal direction (axial direction) of the object to be detected. Furthermore, in order to determine the direction of the torsion of the object to be detected based on the electrostatic capacitance values that are outputted from the electrostatic capacitance sensor, it is necessary to dispose two sensor elements in intersecting direction.

However, when a plurality of sensor elements that are disposed in the intersecting directions are attached in an oblique direction in the object to be detected, in an electrostatic capacitance sensor, if the sensor elements overlap with each other, the thickness of the sensor elements overlapping with each other will increase. In this case, wear and deterioration of the electrostatic capacitance sensor will easily progress by an external force. Consequently, in an electrostatic capacitance sensor, it is required to simplify the stacking structure of the sensor elements when forming the plurality of sensor elements to be on the same sheet.

In addition, when the plurality of sensor elements are formed to be on the same sheet in the electrostatic capacitance sensor, it is also required to achieve improvement in processibility, or achieve reduction in thickness of the sensor elements to improve attachability to the object to be detected, by simplifying the stacking structure of the sensor elements.

The present invention addresses the above-mentioned problem as an example, and it is an object of the present invention to provide an electrostatic capacitance sensor that can simplify a structure in which a plurality of sensor elements are formed into a same sheet shape.

### Solution to Problem

In order to achieve the above-described object, an electrostatic capacitance sensor according to the present invention is an electrostatic capacitance sensor including a first sensor and a second sensor, wherein the first sensor and the second sensor each have at least a ground layer, a dielectric layer, and a voltage application layer stacked, and the first sensor and the second sensor overlap in a partial region in a surface direction and share the ground layer in common.

In the electrostatic capacitance sensor according to one aspect of the present invention, the first sensor has the voltage application layer, the dielectric layer, and the ground layer stacked in order from a lower side in a stacking direction, and the second sensor has the ground layer, the dielectric layer, and the voltage application layer stacked in order from the lower side in the stacking direction.

In the electrostatic capacitance sensor according to one aspect of the present invention, the electrostatic capacitance sensor includes an insulation layer, and includes a lower side insulation layer that is stacked on a lower side of the voltage application layer in the first sensor, and an upper side insulation layer that is stacked on an upper side of the voltage application layer in the second sensor.

In the electrostatic capacitance sensor according to one aspect of the present invention, wherein the first sensor and the second sensor each have a rectangular shape having a long side and a short side in the surface direction, and they intersect each other in the region.

In the electrostatic capacitance sensor according to one aspect of the present invention, wherein the first sensor and the second sensor respectively intersect each other in central portions in a longitudinal direction.

### Effects of Invention

With the electrostatic capacitance sensor according to the present invention, it is possible to simplify the structure in which a plurality of sensor elements are formed into a same sheet shape.

### Brief Description of Drawings

[Fig. 1] Fig. 1 is a plan view schematically showing a configuration of an electrostatic capacitance sensor according to an embodiment of the present invention.
[Fig. 2] Fig. 2 is a sectional view taken along line A-A in the electrostatic capacitance sensor shown in Fig. 1.
[Fig. 3] Fig. 3 is a sectional view taken along line B-B in the electrostatic capacitance sensor shown in Fig. 1.
[Fig. 4] Fig. 4 is a schematic view showing a capacitor equivalent to the electrostatic capacitance sensor shown in Fig. 1.
[Fig. 5] Fig. 5 is a plan view showing a step of producing a lower side insulation layer in the electrostatic capacitance sensor shown in Fig. 1.
[Fig. 6] Fig. 6 is a plan view showing a step of producing a first voltage application layer of a first sensor in the electrostatic capacitance sensor shown in Fig. 1.
[Fig. 7] Fig. 7 is a plan view showing a step of producing a first dielectric layer of the first sensor in the electrostatic capacitance sensor shown in Fig. 1.
[Fig. 8] Fig. 8 is a plan view showing a step of producing a ground layer of the first sensor and a second sensor in the electrostatic capacitance sensor shown in Fig. 1.
[Fig. 9] Fig. 9 is a plan view showing a step of producing a second dielectric layer of the second sensor in the electrostatic capacitance sensor shown in Fig. 1.
[Fig. 10] Fig. 10 is a plan view showing a step of producing a second voltage application layer of the second sensor in the electrostatic capacitance sensor shown in Fig. 1.
[Fig. 11] Fig. 11 is a plan view showing a step of producing an upper side insulation layer in the electrostatic capacitance sensor shown in Fig. 1.
[Fig. 12] Fig. 12 is a schematic diagram showing one example of an electrostatic capacitance measurement circuit using the electrostatic capacitance sensor shown in Fig. 1.
[Fig. 13] Fig. 13 is a schematic view showing an electrostatic capacitance section in a state in which the electrostatic capacitance sensor shown in Fig. 1 is attached to an object to be detected.
[Fig. 14] Fig. 14 is a plan view schematically showing a configuration of an electrostatic capacitance sensor of a comparative example.
[Fig. 15] Fig. 15 is a sectional view taken along line A1-A1 in the electrostatic capacitance sensor shown in Fig. 14.
[Fig. 16] Fig. 16 is a sectional view taken along line B1-B1 in the electrostatic capacitance sensor shown in Fig. 14.

### Description of Embodiments

Hereinafter, an electrostatic capacitance sensor 1 according to an embodiment of the present invention will be described with reference to the drawings.

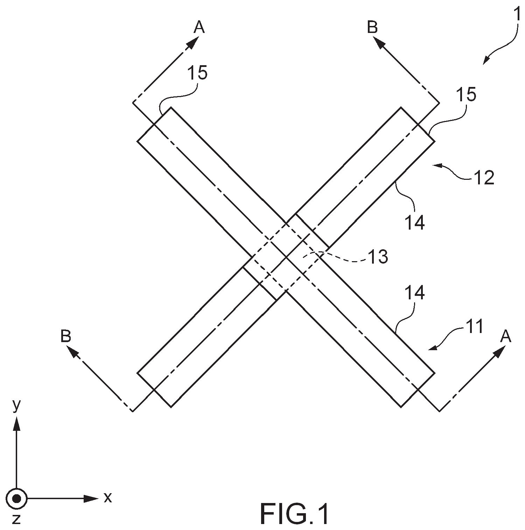

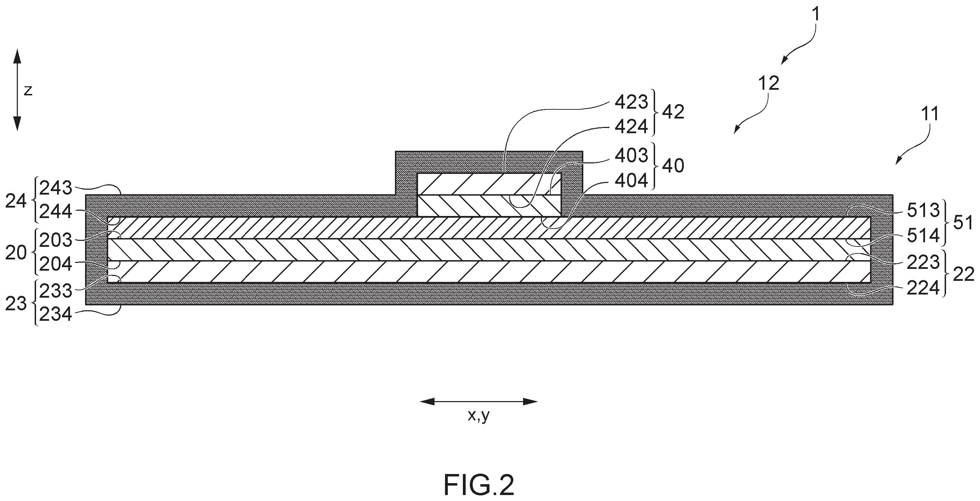

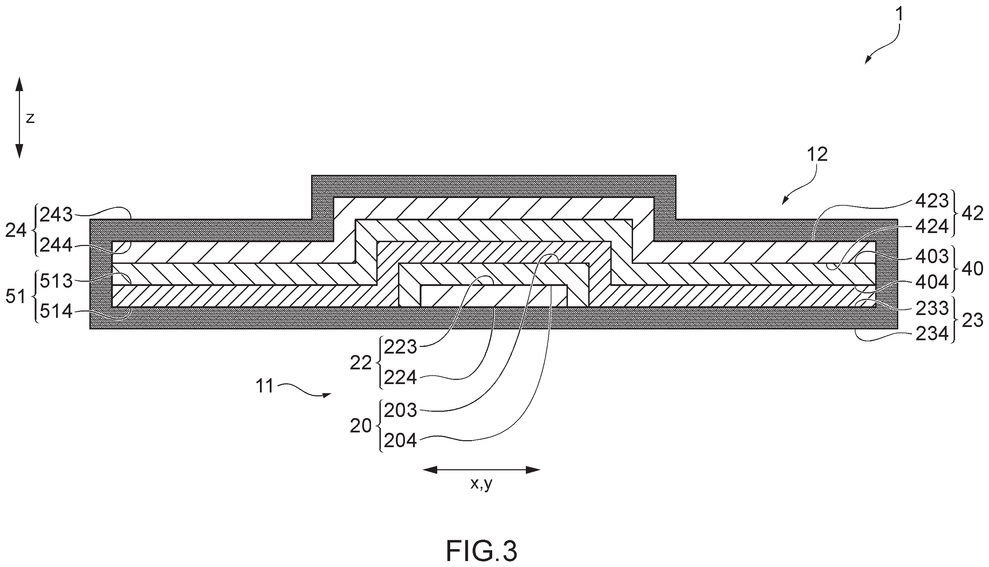

Fig. 1 is a plan view schematically showing a configuration of the electrostatic capacitance sensor 1 according to the embodiment of the present invention. Fig. 2 is a sectional view taken along line A-A in the electrostatic capacitance sensor 1. Fig. 3 is a sectional view taken along line B-B in the electrostatic capacitance sensor 1. Fig. 2 is a sectional view for mainly showing a layer configuration of a first sensor 11 in the electrostatic capacitance sensor 1. Fig. 3 is a sectional view for mainly showing a layer configuration of a second sensor 12 in the electrostatic capacitance sensor 1.

In the following explanation, a lateral (left-right direction) direction in the plan view shown in Fig. 1, of the electrostatic capacitance sensor 1 is defined as an x-axis direction, and a vertical direction (up-down direction) in the plan view shown in Fig. 1, which is a direction orthogonal to an x axis, is defined as a y-axis direction. Furthermore, in the following explanation, a direction that is orthogonal to the x axis and a y axis, that is, a direction that penetrates through the drawing in the plan view shown in Fig. 1 (vertical direction in Figs. 2 and 3) is defined as a z-axis direction (a height direction, a stacking direction). In the following explanation, the lateral direction, the vertical direction, the left-right direction, the up-down direction, and the like are based solely on the drawings in the present embodiment, and are not limited in the actual modes. In the following explanation, a direction of an xy plane that is a plane perpendicular to the stacking direction is referred to as a surface direction. Furthermore, in the following explanation, surfaces shown in the plan view shown in Fig. 1 are all front surfaces, and surfaces on an opposite side of the front surfaces are back surfaces.

As shown in Fig. 1 to Fig. 3, the electrostatic capacitance sensor 1 according to the present embodiment includes the first sensor 11 and the second sensor 12. The first sensor 11 and the second sensor 12 each have at least a ground layer 51, a dielectric layer (a first dielectric layer 20, and a second dielectric layer 40), and a voltage application layer (a first voltage application layer 22, and a second voltage application layer 42) stacked thereon. The first sensor 11 and the second sensor 12 overlap in a partial region in the surface direction, and share the ground layer 51 in common. Hereinafter, the configuration and an operation of the electrostatic capacitance sensor 1 will be specifically described.

### [Configurations of First Sensor and Second Sensor]

As shown in Fig. 1, in the electrostatic capacitance sensor 1, the first sensor 11 and the second sensor 12 overlap so that the second sensor 12 is disposed on an upper side of the first sensor 11 in a partial region (overlap region 13) in the surface direction as described above. In Fig. 1, broken lines are lines provided to show the overlap region 13 where the first sensor 11 and the second sensor 12 overlap with each other. Specifically, the first sensor 11 and the second sensor 12 are each in a rectangular shape having a long side (long side 14), and a short side (short side 15) in the surface direction. The electrostatic capacitance sensor 1 is formed in an X-shape or substantially X-shape in plan view in which the first sensor 11 and the second sensor 12 intersect in the overlap region 13 located in central portions in a longitudinal direction. In the electrostatic capacitance sensor 1, the first sensor 11 and the second sensor 12 are integrally formed.

Note that in the electrostatic capacitance sensor 1, the overlap region 13 in which the first sensor 11 and the second sensor 12 intersect each other is not limited to the central portion in the longitudinal direction as shown in Fig. 1, but a length of one side and a length of another side in the left-right direction or the up-down direction from the overlap region 13 may be different. Furthermore, in the electrostatic capacitance sensor 1, an angle at which the first sensor 11 and the second sensor 12 intersect each other is not limited to an angle shown in Fig. 1. Furthermore, in the electrostatic capacitance sensor 1, the first sensor 11 and the second sensor 12 are not limited to the X-shape or substantially X-shape in plan view as shown in Fig. 1, but may be formed in, for example, a V-shape or substantially V-shape in plan view. Furthermore, in the electrostatic capacitance sensor 1, lengths of long sides 14 and short sides 15 of the first sensor 11 and the second sensor 12, a ratio of the lengths, and the like are not limited to the example shown in Fig. 1.

### [Configuration of Dielectric Layer, Ground Layer, Voltage Application Layer, and Insulation Layer]

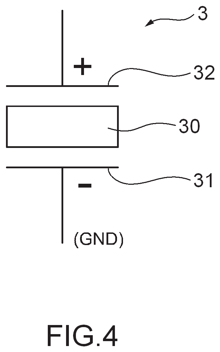

Fig. 4 is a schematic view showing a capacitor 3 equivalent to the electrostatic capacitance sensor 1.

Referring to Fig. 2 to Fig. 4, configurations of the first dielectric layer 20 and the second dielectric layer 40, the ground layer 51, the first voltage application layer 22 and the second voltage application layer 42, and a lower side insulation layer 23 and an upper side insulation layer 24 in the electrostatic capacitance sensor 1 will be described.

The first dielectric layer 20 and the second dielectric layer 40 each have a function of a dielectric 30 in the capacitor 3 shown in Fig. 4. As described above, in the first sensor 11, the first dielectric layer 20 is stacked with a dielectric layer front surface 203 that is positioned on an upper side facing a ground layer back surface 514 of the ground layer 51, inside of a region surrounded by the lower side insulation layer 23 and the upper side insulation layer 24 (close to a center). Furthermore, in the first sensor 11, the first dielectric layer 20 is stacked with a dielectric layer back surface 204 that is positioned at a lower side facing a voltage application layer front surface 223 of the first voltage application layer 22, inside of the region surrounded by the lower side insulation layer 23 and the upper side insulation layer 24.

In the second sensor 12, the second dielectric layer 40 is stacked with a dielectric layer front surface 403 that is positioned on an upper side facing a voltage application layer back surface 424 of the second voltage application layer 42, inside of the region surrounded by the lower side insulation layer 23 and the upper side insulation layer 24. Furthermore, in the second sensor 12, the second dielectric layer 40 is stacked with a dielectric layer back surface 404 that is positioned on a lower side facing a ground layer front surface 513 of the ground layer 51, inside of the region surrounded by the lower side insulation layer 23 and the upper side insulation layer 24.

The first dielectric layer 20 and the second dielectric layer 40 are sheet-like members that are integrally formed from an elastomer composition. The first dielectric layer 20 and the second dielectric layer 40 can be reversibly deformed so that areas of the front and back surfaces thereof change. Further, the first dielectric layer 20 and the second dielectric layer 40 have relatively large relative dielectric constants, for example, 5 or more (measurement frequency 100 Hz). As the elastomer composition, those containing an elastomer and, as necessary, other optional ingredients such as dielectric particles are cited. Examples of elastomer include a natural rubber, isoprene rubber, nitrile rubber (NBR), ethylene propylene rubber (EPDM), styrene butadiene rubber (SBR), butadiene rubber (BR), chloroprene rubber (CR), silicone rubber, fluororubber, acrylic rubber, hydrogenated nitrile rubber, urethane rubber, and the like. These rubbers may be used alone, or two or more rubbers may be used in combination.

The ground layer 51 has a function of an electrode 31 on a negative side in the capacitor 3 shown in Fig. 4. The ground layer 51 is a layer that is commonly used by both the first sensor 11 and the second sensor 12, that is, a layer that is shared by the first sensor 11 and the second sensor 12. Since the ground layer 51 is shared by the first sensor 11 and the second sensor 12, the ground layer 51 is stacked with the ground layer back surface 514 that is positioned on a lower side facing the dielectric layer front surface 203 of the first dielectric layer 20 that forms the first sensor 11, inside of the region surrounded by the lower side insulation layer 23 and the upper side insulation layer 24. Furthermore, the ground layer 51 has the ground layer front surface 513 that is positioned on the upper side stacked with the dielectric layer back surface 404 of the second dielectric layer 40 that forms the second sensor 12, inside of the region surrounded by the lower side insulation layer 23 and the upper side insulation layer 24. The ground layer front surface 513 is stacked to face an upper side insulation layer back surface 244 of the upper side insulation layer 24.

The ground layer 51 is formed of, for example, an elastomer composition as described above, containing a conductive material such as carbon black, carbon nanotubes, silver nanoparticles, or other conductive particles.

The first voltage application layer 22 and the second voltage application layer 42 each have a function of an electrode 32 on a positive side in the capacitor 3 shown in Fig. 4. The first voltage application layer 22 is stacked with a voltage application layer back surface 224 that is positioned on a lower side facing a lower side insulation layer front surface 233 of the lower side insulation layer 23, inside of the region surrounded by the lower side insulation layer 23 and the upper side insulation layer 24. Furthermore, in the first voltage application layer 22, the voltage application layer front surface 223 that is positioned on the upper side is stacked, with the dielectric layer back surface 204 of the first dielectric layer 20 that forms the first sensor 11, inside of the region surrounded by the lower side insulation layer 23 and the upper side insulation layer 24.

The second voltage application layer 42 is stacked, with the voltage application layer back surface 424 that is positioned on the lower side facing the dielectric layer front surface 403 of the second dielectric layer 40 that forms the second sensor 12, inside of the region surrounded by the lower side insulation layer 23 and the upper side insulation layer 24. Furthermore, the second voltage application layer 42 is stacked with a voltage application layer front surface 423 that is positioned on an upper side facing the upper side insulation layer back surface 244 of the upper side insulation layer 24, inside of the region surrounded by the lower side insulation layer 23 and the upper side insulation layer 24.

The first voltage application layer 22 and the second voltage application layer 42 are formed of, for example, an elastomer composition, containing a conductive material such as carbon black, carbon nanotubes, silver nanoparticles, or other conductive particles, similarly to the ground layer 51 described above.

As shown in Fig. 2 and Fig. 3, in the first sensor 11, the lower side insulation layer 23 is provided on the lower side (outside, a side away from centers of the first sensor 11 and the second sensor 12) of the first dielectric layer 20. Furthermore, as shown in Fig. 3, in the second sensor 12, the lower side insulation layer 23 is provided on a lower side of the ground layer 51.

As shown in Fig. 2 and Fig. 3, in the first sensor 11 and the second sensor 12, the upper side insulation layer 24 is provided on an upper side (outside, a side away from the centers of the first sensor 11 and the second sensor 12) of the ground layer 51. Furthermore, in the second sensor 12, the upper side insulation layer 24 is provided on an upper side of the second voltage application layer 42.

The lower side insulation layer 23 and the upper side insulation layer 24 electrically insulate the ground layer 51 and the like from an outside. Furthermore, the lower side insulation layer 23 and the upper side insulation layer 24 can enhance strength and durability of the electrostatic capacitance sensor 1. For the lower side insulation layer 23 and the upper side insulation layer 24, a similar elastomer composition to the material that also forms the first dielectric layer 20, or the like can be used. Note that in the electrostatic capacitance sensor 1, the insulation layers are not limited to those covering the upper sides and lower sides of the respective layers that form the first sensor 11 and the second sensor 12 shown in Fig. 2 and Fig. 3, that is, the first dielectric layer 20 and the second dielectric layer 40, the ground layer 51, and the first voltage application layer 22 and the second voltage application layer 42. That is to say, in the electrostatic capacitance sensor 1, the insulation layers may cover side surfaces of the respective layers that form the first sensor 11 and the second sensor 12.

Thereafter, disposition and stacking order of the respective layers that form the first sensor 11 and the second sensor 12 will be described.

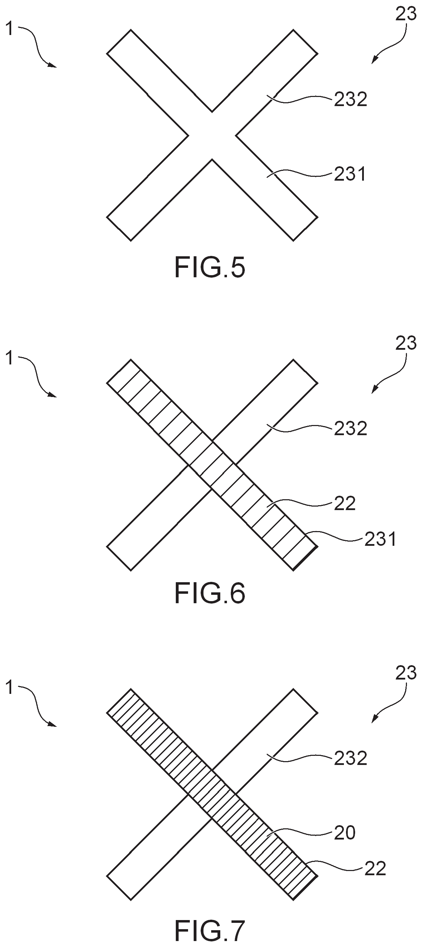

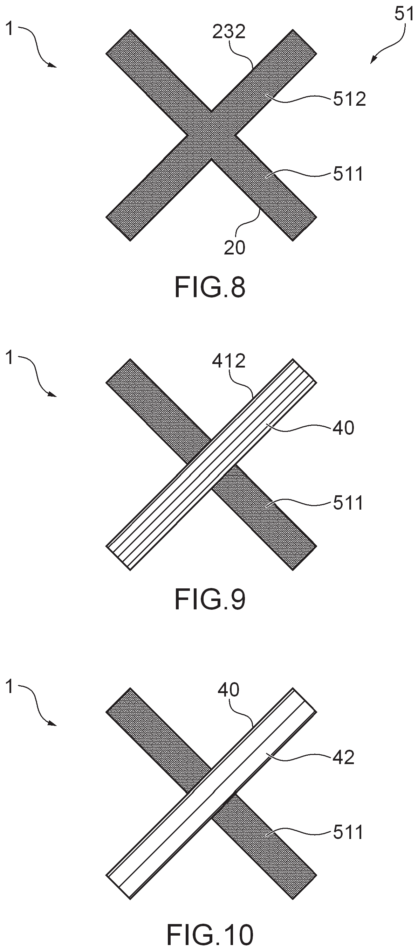

Fig. 5 is a plan view showing a step of producing the lower side insulation layer 23 in the electrostatic capacitance sensor 1. Fig. 6 is a plan view showing a step of producing the first voltage application layer 22 of the first sensor 11 in the electrostatic capacitance sensor 1. Fig. 7 is a plan view showing a step of producing the first dielectric layer 20 of the first sensor 11 in the electrostatic capacitance sensor 1. Fig. 8 is a plan view showing a step of producing the ground layer 51 of the first sensor 11 and the second sensor 12 in the electrostatic capacitance sensor 1. Fig. 9 is a plan view showing a step of producing the second dielectric layer 40 of the second sensor 12 in the electrostatic capacitance sensor 1. Fig. 10 is a plan view showing a step of producing the second voltage application layer 42 of the second sensor 12 in the electrostatic capacitance sensor 1.

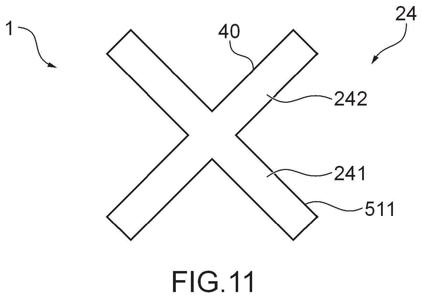

The electrostatic capacitance sensor 1 can be manufactured by, for example, a step (1) to a step (7) as follows. The electrostatic capacitance sensor 1 can be manufactured by performing a step (1) of producing the lower side insulation layer 23 shown in Fig. 5, a step (2) of coating the lower side insulation layer 23 with the elastomer composition, and producing the first voltage application layer 22 of the first sensor 11 shown in Fig. 6, a step (3) of coating the first voltage application layer 22 with the elastomer composition, and producing the first dielectric layer 20 shown in Fig. 7, a step (4) of coating the first dielectric layer 20 and the lower side insulation layer 23 with the elastomer composition, and producing the ground layer 51 shown in Fig. 8, a step (5) for producing the second dielectric layer 40 of the second sensor 12 on the ground layer 51 shown in Fig. 9, a step (6) of producing the second voltage application layer 42 on the second dielectric layer 40 shown in Fig. 10, and a step (7) of producing the upper side insulation layer 24 on the second voltage application layer 42 and the ground layer 51 shown in Fig. 11, in order from the lower side. In the above-described steps, for example, the first dielectric layer 20, the second dielectric layer 40, the first voltage application layer 22, and the second voltage application layer 42 that are produced in the step (2), step (3), step (5), and step (6) are different in stacking structure in the first sensor 11 and the second sensor 12, and therefore, these layers can be produced after the spots where layers are not formed are masked according to the respective shapes. Production of the respective layers can be performed by, for example, appropriate methods such as a spray coat screen printing method, and an inkjet printing method.

As shown in Fig. 5, in the step (1) of producing the lower side insulation layer 23 of the electrostatic capacitance sensor 1, the lower side insulation layer 23 has a same or substantially same shape as the planar shape of the electrostatic capacitance sensor 1 shown in Fig. 1. The lower side insulation layer 23 has a first lower side insulation section 231 that is positioned on a lower side of the first voltage application layer 22 in the first sensor 11, and a second lower side insulation section 232 that is positioned on the lower side of the ground layer 51 in the second sensor 12.

As shown in Fig. 6, in the step (2) of forming the electrostatic capacitance sensor 1, after the lower side insulation layer 23 is produced, the first voltage application layer 22 that forms the first sensor 11 is formed on the first lower side insulation section 231. The first voltage application layer 22 has a same or substantially same shape as a planar shape of the first sensor 11 of the electrostatic capacitance sensor 1 shown in Fig. 1.

As shown in Fig. 7, in the step (3) of forming the electrostatic capacitance sensor 1, after the first voltage application layer 22 is produced, the first dielectric layer 20 that forms the first sensor 11 is formed on the first voltage application layer 22. The first dielectric layer 20 has a same or substantially same shape as the planar shape of the first sensor 11 of the electrostatic capacitance sensor 1 shown in Fig. 1.

As shown in Fig. 8, in the step (4) of forming the electrostatic capacitance sensor 1, after the first dielectric layer 20 is produced, the ground layer 51 is formed on the first dielectric layer 20 and the second lower side insulation section 232. The ground layer 51 has a same or substantially same shape as the planar shape of the electrostatic capacitance sensor 1 shown in Fig. 1. The ground layer 51 has a first ground section 511 that is positioned on a lower side of the upper side insulation layer 24 in the first sensor 11, and a second ground section 512 that is positioned on an upper side of the second dielectric layer 40 in the second sensor 12.

As shown in Fig. 9, in the step (5) of forming the electrostatic capacitance sensor 1, after the ground layer 51 is produced, the second dielectric layer 40 that forms the second sensor 12 is formed on the second ground section 512. The second dielectric layer 40 has a same or substantially same shape as a planar shape of the second sensor 12 of electrostatic capacitance sensor 1 shown in Fig. 1.

As shown in Fig. 10, in the step (6) of forming the electrostatic capacitance sensor 1, after the second dielectric layer 40 is produced, the second voltage application layer 42 that forms the second sensor 12 is formed on the second dielectric layer 40. The second voltage application layer 42 has a same or substantially same shape as the planar shape of the second sensor 12 of the electrostatic capacitance sensor 1 shown in Fig. 1.

Fig. 11 is a plan view showing a step of producing the upper side insulation layer 24 in the electrostatic capacitance sensor 1. As shown in Fig. 11, in the step (7) of forming the electrostatic capacitance sensor 1, after the second voltage application layer 42 is produced, the upper side insulation layer 24 is formed on the first ground section 511 and the second voltage application layer 42. The upper side insulation layer 24 has a same or substantially same shape as the planar shape of the electrostatic capacitance sensor 1 shown in Fig. 1. The upper side insulation layer 24 has a first upper side insulation section 241 that is positioned on an upper side of the first ground section 511 in the first sensor 11, and a second upper side insulation section 242 that is positioned on the upper side of the second voltage application layer 42 in the second sensor 12.

### [Operation of Electrostatic Capacitance Sensor]

Thereafter, an operation of the electrostatic capacitance sensor 1 including the configuration described above will be described.

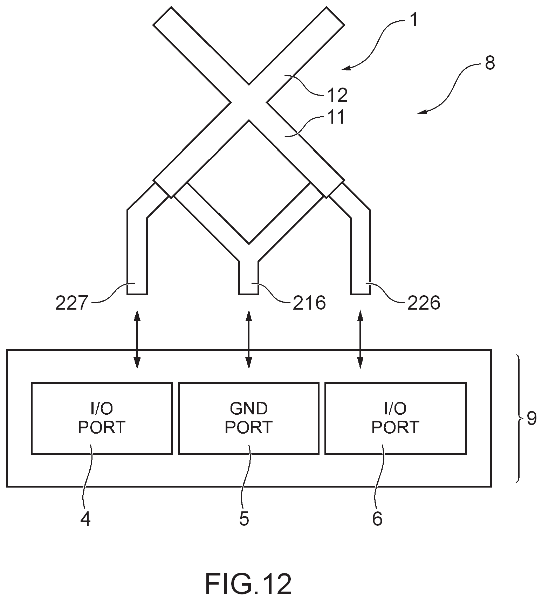

Fig. 12 is a schematic diagram showing one example of an electrostatic capacitance measurement circuit 8 using the electrostatic capacitance sensor 1. As shown in Fig. 12, the electrostatic capacitance measurement circuit 8 is formed by the electrostatic capacitance sensor 1, and a control IC (Integrated Circuit) 9.

In addition to the components described above, the electrostatic capacitance sensor 1 includes a negative side electrode section 216 that extends from the ground layer 51, a positive side electrode section 226 that extends from the first voltage application layer 22 of the first sensor 11, and a positive side electrode section 227 that extends from the second voltage application layer 42 of the second sensor 12. Note that the negative side electrode section 216, and the positive side electrode sections 226 and 227 are not limited to an example in which they are formed to extend from the electrostatic capacitance sensor 1 as shown in Fig. 9, and may be connected by, for example, a connector for a thin board.

The control IC 9 has I/O (Input/Output) ports 4 and 6, and a ground (GND) port 5. The I/O ports 4 and 6 electrically connect to the positive side electrode sections 226 and 227. The ground port 5 electrically connects to the negative side electrode section 216. Note that in the electrostatic capacitance measurement circuit 8, a switching circuit such as a MOSFET (Metal-Oxide-Semiconductor Field-Effect Transistor) may be provided between the electrostatic capacitance sensor 1, and the control IC 9.

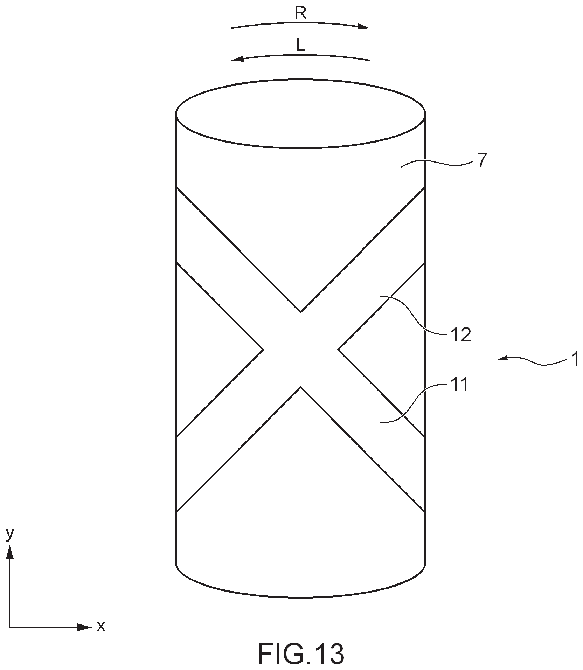

Fig. 13 is a schematic view showing the electrostatic capacitance sensor 1 in a state in which it is attached to an object 7 to be detected.

As shown in Fig. 13, the electrostatic capacitance sensor 1 is attached to a front surface of the object 7 to be detected to detect torsion that occurs to the object 7 to be detected such as a long and thin round bar. Specifically, the electrostatic capacitance sensor 1 is attached so that the first sensor 11 and the second sensor 12 are disposed obliquely (at an angle) to a longitudinal direction that is an axial direction of the object 7 to be detected. The electrostatic capacitance sensor 1 is charged by a voltage being applied thereto from the I/O ports 4 and 6 of the control IC 9 in the electrostatic capacitance measurement circuit 8 shown in Fig. 12, and measures torsion in the object 7 to be detected.

As shown in Fig. 13, the electrostatic capacitance sensor 1 measures, with the first sensor 11 and the second sensor 12 attached obliquely to the axial direction of the object 7 to be detected. In the electrostatic capacitance sensor 1, the first sensor 11 and the second sensor 12 intersect in different orientations in the overlap region 13 and are integrally provided. Consequently, with the electrostatic capacitance sensor 1, it is possible to attach the first sensor 11 and the second sensor 12 obliquely to the axial direction of the object 7 to be detected, and therefore, it is possible to detect highly precise torsion.

In the electrostatic capacitance sensor 1, electrostatic capacitance values of the first sensor 11 and the second sensor 12 change depending on whether the torsion is clockwise in an R direction or counterclockwise in an L direction. Consequently, with the electrostatic capacitance sensor 1, when detecting torsion that occurs to the object 7 to be detected, it is possible to determine the direction of torsion (clockwise R or counterclockwise L with respect to a rotation direction of the object 7 to be detected) by comparing an electrostatic capacitance value of the first sensor 11 and an electrostatic capacitance value of the second sensor 12.

As described above, in electrostatic capacitance sensor 1, the first sensor 11 and the second sensor 12 overlap with each other in the partial overlap region 13 in the surface direction. The first sensor 11 is formed by the ground layer 51, the first dielectric layer 20 that sandwiches the ground layer 51 to be stacked, and the first voltage application layer 22 that is stacked on the first dielectric layer 20. The second sensor 12 is formed by the ground layer 51, the second dielectric layer 40 that sandwiches the ground layer 51 on the surface on the opposite side to the surface that faces the first dielectric layer 20 to be stacked, and the second voltage application layer 42 that is stacked on the second dielectric layer 40. Since the first sensor 11 and the second sensor 12 are formed to share the ground layer 51 in the overlap region 13 like this, the electrostatic capacitance sensor 1 avoids the components (sensor elements) of the sensor overlapping each other, and reduces the thickness of the sensor elements, and thereby it is possible to reduce wear and deterioration by an external force, when the object 7 to be detected has a high ratio of the height dimension to the diameter dimension like a round bar.

Furthermore, with the electrostatic capacitance sensor 1, since the first sensor 11 and the second sensor 12 share the ground layer 51 in the overlap region 13 to simplify the stacking structure as described above, it is possible to achieve improvement in processibility, or improvement in attachability to the object 7 to be detected by reduction in thickness of the sensor elements.

In the electrostatic capacitance sensor 1, the first sensor 11 and the second sensor 12 are each in the rectangular shape having the long sides and short sides in the surface direction. Furthermore, the first sensor 11 and the second sensor 12 intersect each other in the overlap region 13. With such a configuration, the electrostatic capacitance sensor 1 can perform detection of torsion in different positions in the longitudinal direction of the object 7 to be detected when the electrostatic capacitance sensor 1 is attached to the object 7 to be detected like a round bar as shown in Fig. 13, and thereby it is possible to realize more precise detection of torsion.

In the electrostatic capacitance sensor 1, the overlap region 13 where the first sensor 11 and the second sensor 12 intersect is provided at the respective central portions in the longitudinal direction. With such a configuration, the electrostatic capacitance sensor 1 can perform detection of torsion uniformly regardless of the direction of the torsion relative to the rotation direction of the object 7 to be detected.

In the electrostatic capacitance sensor 1, in the first sensor 11, the first voltage application layer 22, the first dielectric layer 20, and the ground layer 51 are stacked in order from the lower side in the stacking direction, and in the second sensor 12, the ground layer 51 which it shares with the first sensor 11, the second dielectric layer 40, and the second voltage application layer 42 are stacked in order from the lower side in the stacking direction. Furthermore, in the electrostatic capacitance sensor 1, the lower side insulation layer 23 and the upper side insulation layer 24 are included. In the first sensor 11, the lower side insulation layer 23 and the upper side insulation layer 24 cover the ground layer front surface 513 that is the surface on the opposite side to the surface that faces the first dielectric layer 20 in the ground layer 51, and the voltage application layer back surface 224 that is the surface on the opposite side to the surface that faces the first dielectric layer 20 in the first voltage application layer 22. In the second sensor 12, the lower side insulation layer 23 and the upper side insulation layer 24 cover the ground layer back surface 514 that is the surface on the opposite side to the surface that faces the second dielectric layer 40 in the ground layer 51, and the voltage application layer front surface 423 that is the surface on the opposite side to the surface that faces the second dielectric layer 40 in the second voltage application layer 42.

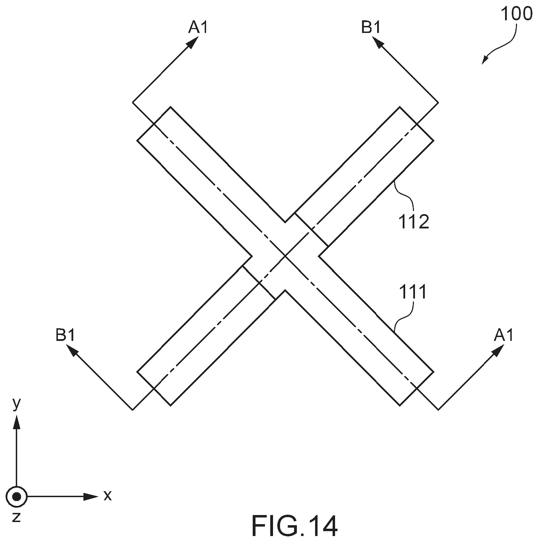

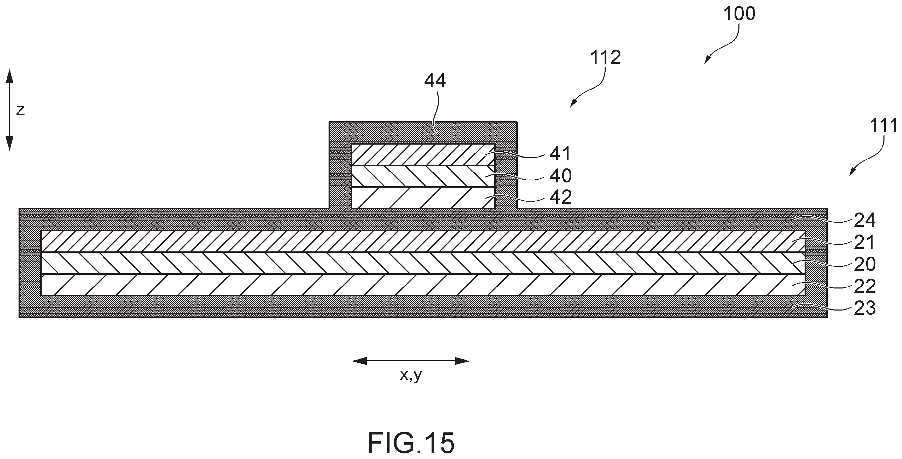

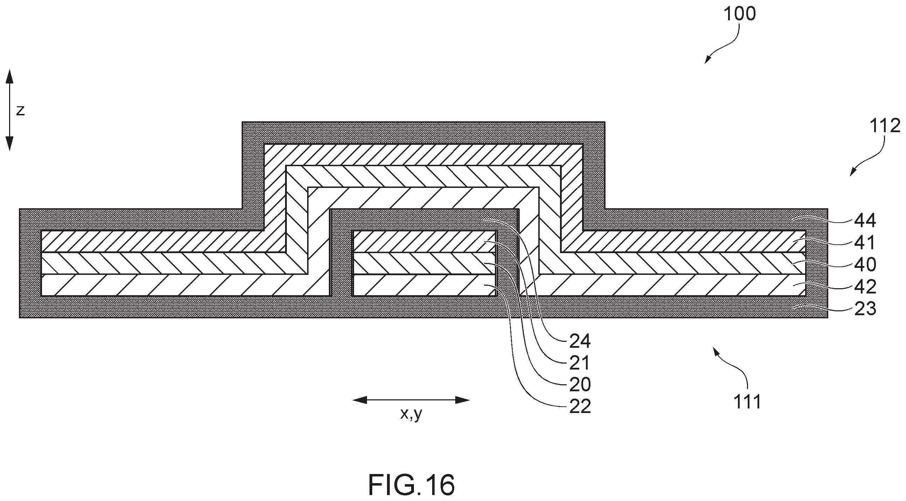

Fig. 14 is a plan view schematically showing a configuration of an electrostatic capacitance sensor 100 of a comparative example. Fig. 15 is a sectional view taken along line A1-A1 in the electrostatic capacitance sensor 100. Fig. 16 is a sectional view taken along line B1-B1 in the electrostatic capacitance sensor 100.

The electrostatic capacitance sensor 100 of the comparative example shown in Fig. 14 to Fig. 16 is similar in planar shape to the electrostatic capacitance sensor 1 described above, but differs from the electrostatic capacitance sensor 1 in that a first sensor 111 and a second sensor 112 respectively have ground layers, that is, a first ground layer 21, and a second ground layer 41, as shown in Fig. 15 and Fig. 16. Furthermore, the electrostatic capacitance sensor 100 differs from the electrostatic capacitance sensor 1 in that an upper side insulation layer 24 is stacked on an upper side of the first ground layer 21 of the first sensor 11, and a second voltage application layer 42 of the second sensor 12 is stacked on an upper side of the upper side insulation layer 24. Furthermore, the electrostatic capacitance sensor 100 differs from the electrostatic capacitance sensor 1 in that a second upper side insulation layer 44 is provided on an upper side of the second ground layer 41 of the second sensor 112 apart from the upper side insulation layer 24 of the first sensor 111.

As shown in Fig. 2 and Fig. 3, the electrostatic capacitance sensor 1 described above is formed of seven layers from the lower side insulation layer 23 on a lowermost layer to the upper side insulation layer 24 on an uppermost layer. On the other hand, as shown in Fig. 15 and Fig. 16, the electrostatic capacitance sensor 100 of the comparative example is formed of nine layers from the lower side insulation layer 23 of the first sensor 111 on a lowermost layer to the second upper side insulation layer 44 of the second sensor 112 on an uppermost layer.

As above, in the electrostatic capacitance sensor 1, the first sensor 11 and the second sensor 12 share the ground layer 51 that is one of electrode layers, and therefore, the first sensor 11 and the second sensor 12 do not have to have the first ground layer 21 and the second ground layer 41 respectively as in the electrostatic capacitance sensor 100 of the comparative example. Furthermore, with the electrostatic capacitance sensor 1, it is not necessary to provide the insulation layer (second upper side insulation layer 44) between the first sensor 11 and the second sensor 12 as in the electrostatic capacitance sensor 100 of the comparative example. Consequently, with the electrostatic capacitance sensor 1, as shown in the step (1) to step (7) described above, it is possible to simplify the step of producing the electrostatic capacitance sensor 1, and the stacking structure as compared with the electrostatic capacitance sensor 100 of the comparative example. That is to say, with the electrostatic capacitance sensor 1, it is possible to achieve processibility, and reduction in thickness in the stacking direction. Furthermore, with the electrostatic capacitance sensor 1, it is possible to improve attachability to the object 7 to be detected as described above, by achieving reduction in thickness in the stacking direction.

Consequently, with the electrostatic capacitance sensor 1, it is possible to simplify the structure in which the plurality of sensor elements are formed into a same sheet shape.

In addition, those skilled in the art can appropriately modify the present invention in accordance with conventionally known knowledge. As long as such modifications still include the configuration of the present invention, they are of course included in the scope of the present invention.

For example, in the electrostatic capacitance sensor 1 described above, the example in which the lower side insulation layer 23 and the upper side insulation layer 24 cover only the top and bottom surfaces of the first dielectric layer 20, the ground layer 51, and the first voltage application layer 22 is described, but the lower side insulation layer 23 and the upper side insulation layer 24 may cover the top and bottom surfaces, and side surfaces of the first dielectric layer 20, the ground layer 51, and the first voltage application layer 22.

For example, it is possible to use the electrostatic capacitance sensor 1 described above for the purpose of detecting torsion of objects to be detected in various shapes, without being limited to the object 7 to be detected that is the round bar shown in Fig. 13.

### List of Reference Signs

1, 100 the electrostatic capacitance sensor,
3 capacitor,
4, 6 I/O (Input/Output) port,
5 ground port,
7 object to be detected,
8 electrostatic capacitance measurement circuit,
11, 111 first sensor,
12, 112 second sensor,
13 overlap region,
14 long side,
15 short side,
20 first dielectric layer (dielectric layer),
21 first ground layer,
22 first voltage application layer (voltage application layer),
23 lower side insulation layer,
24 upper side insulation layer,
30 dielectric,
31 electrode on negative side,
32 electrode on positive side,
40 second dielectric layer (dielectric layer),
41 second ground layer,
42 second voltage application layer (voltage application layer),
44 second upper side insulation layer,
51 ground layer,
203, 403 dielectric layer front surface,
204, 404 dielectric layer back surface,
216 negative side electrode section,
223, 423 voltage application layer front surface,
224, 424 voltage application layer back surface,
226 positive side electrode section,
227 positive side electrode section,
231 first lower side insulation section,
232 second lower side insulation section,
233 lower side insulation layer front surface,
241 first upper side insulation section,
242 second upper side insulation section,
244 upper side insulation layer back surface,
511 first ground section,
512 second ground section,
513 ground layer front surface,
514 ground layer back surface

## Claims

1. An electrostatic capacitance sensor comprising a first sensor and a second sensor, wherein
the first sensor and the second sensor each have at least a ground layer, a dielectric layer, and a voltage application layer stacked, and the first sensor and the second sensor overlap in a partial region in a surface direction and share the ground layer in common.

2. The electrostatic capacitance sensor according to claim 1, wherein
the first sensor has the voltage application layer, the dielectric layer, and the ground layer stacked in order from a lower side in a stacking direction, and
the second sensor has the ground layer, the dielectric layer, and the voltage application layer stacked in order from the lower side in the stacking direction.

3. The electrostatic capacitance sensor according to claim 1 or 2,
the electrostatic capacitance sensor comprising an insulation layer, wherein
the insulation layer comprises
a lower side insulation layer that is stacked on a lower side of the voltage application layer in the first sensor, and
an upper side insulation layer that is stacked on an upper side of the voltage application layer in the second sensor.

4. The electrostatic capacitance sensor according to claim 1 or 2, wherein
the first sensor and the second sensor each have a rectangular shape having a long side and a short side in the surface direction, and they intersect each other in the region.

5. The electrostatic capacitance sensor according to claim 4, wherein
the first sensor and the second sensor respectively intersect each other in central portions in a longitudinal direction.
